# EUROPEAN PATENT APPLICATION

(11) **EP 3 109 138 A1**
(43) Date of publication of application: **28.12.2016**
(21) Application number: 16175428.8
(22) Date of filing: 21.06.2016
(51) Int. Cl.: B62J 1/00

(54) **CYCLING SADDLE FOR TRIATHLON BICYCLE**

(30) Priority: 22.06.2015 IT UB20155145 U
(71) Applicant: G.R. Bike S.r.l., 35127 Padova Frazione Camin (IT)
(72) Inventor: RIZZATO, Andrea, 35031 Abano Terme PD (IT); RIZZATO, Gildo, 35031 Abano Terme PD (IT)
(74) Representative: Modiano, Micaela Nadia

(57) **Abstract**

A cycling saddle (10) for triathlon bicycles, comprising a frame (11), a shell (12) and a pad (13), the shell (12) comprising a front part (15), which has a predominantly longitudinal extension, and a wider rear part (16); at the rear part (16) of said shell (12) there is a grip element (19) that is contoured ergonomically in order to facilitate grip by a user.

## Description

The present invention relates to a cycling saddle for a triathlon bicycle.

Currently, in sports activities that use a bicycle with a high technology content, the discipline of triathlon is increasingly widespread.

A triathlon competition is organized into three stages, which are performed one after the other and are common for all the competing athletes: a first swimming stage, a second cycling stage and a third and final running stage.

The cycling stage comes directly after the swimming stage, and for this reason a triathlete usually handles the bike with wet hands.

The bicycle for the cycling stage is arranged, in the end region of the swimming stage, on adapted stands that make it available to be gripped and picked up by the triathlete.

Usually a triathlete removes the bicycle from the stand by gripping its handlebar and saddle.

In a cycling saddle for triathlon bicycles there are usually four parts: the supporting frame, the shell, the padding and the covering, of which the load-bearing frame and the shell have a structural function.

The load-bearing frame is constituted usually by a metallic bar that is bent so as to define three points for fixing to the shell, a front point and two rear points.

The shell is usually defined by a rigid flat body made of plastic material or carbon fibers or other similar and equivalent materials, contoured so as to have a front part that has a predominantly longitudinal extension and a wider rear part for the resting of the buttocks of a user.

The triathlete is therefore forced to grip the saddle from below in relatively difficult conditions, since his hands are wet and the saddle offers itself for grip with the smooth surface of the shell and inappropriate grips defined by the curved shape of such shell, or with the underlying load-bearing frame, which is awkward to grip.

An optimum handling of the bicycle at the beginning of the cycling test is instead fundamental for the continuation of the competition.

The aim of the present invention is to provide a cycling saddle for triathlon bicycle that is capable of obviating the cited limitations of saddles of the known type.

Within this aim, an object of the invention is to provide a saddle that allows to grip it more safely and effectively than saddles of the known type.

Another object of the invention is to provide a saddle that has an overall performance and comfort that are not lower than those of saddles of the known type.

This aim, as well as these and other objects that will become better apparent hereinafter, are achieved by a cycling saddle for triathlon bicycles, comprising a frame, a shell and a pad, said shell comprising a front part, which has a predominantly longitudinal extension, and a wider rear part, said cycling saddle being characterized in that at the rear part of said shell there is a grip element that is contoured ergonomically in order to facilitate grip on the part of a user.

Further characteristics and advantages of the invention will become better apparent from the description of a preferred but not exclusive embodiment of the cycling saddle according to the invention, illustrated by way of nonlimiting example in the accompanying drawings, wherein:

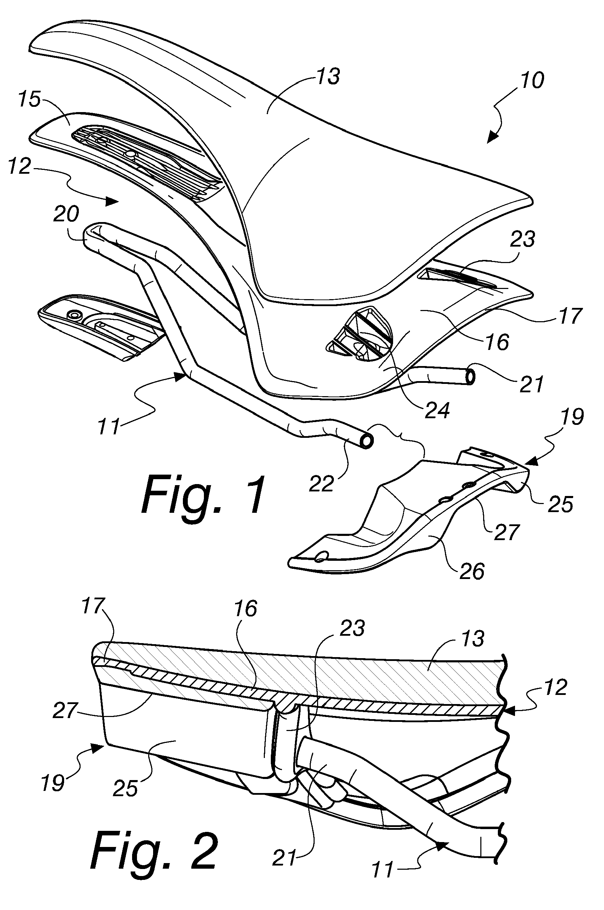

Figure 1 is an exploded perspective view of a saddle according to the invention;
Figure 2 is a longitudinal sectional view of a portion of a saddle according to the invention;

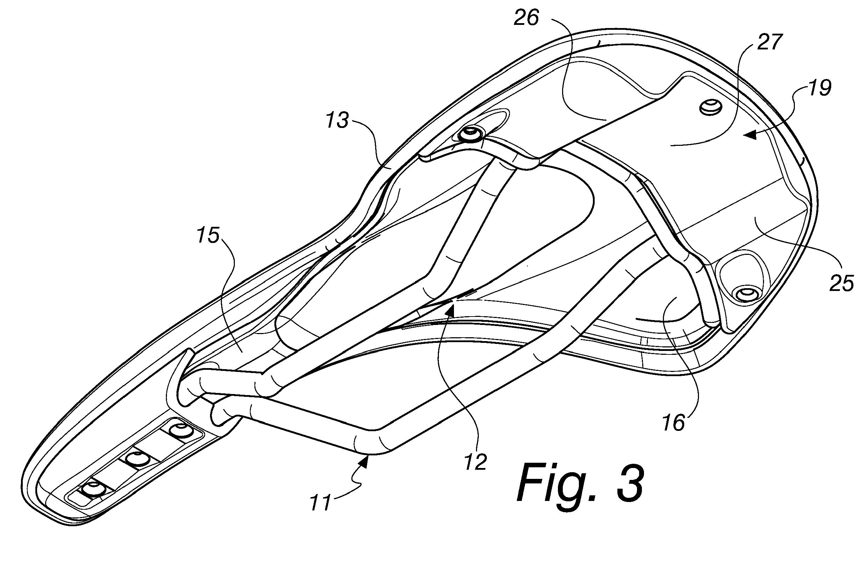

Figure 3 is a bottom perspective view of a saddle according to the invention;
Figure 4 is a plan view of the saddle according to the invention.

With reference to the figures, a cycling saddle for triathlon bicycles according to the invention is designated generally by the reference numeral 10.

Such cycling saddle 10 comprises a load-bearing frame 11, a shell 12 and a pad 13.

The pad 13 is to be understood as comprising possibly a covering and a padding, or as being constituted by the padding alone, the outer layer of which remains exposed as a covering.

The shell 12 comprises a front part 15, which has a predominantly longitudinal extension, and a rear part 16, which is wider.

Such cycling saddle 10 is characterized in that at the rear part 16 of such shell 12 there is a grip element 19 that is contoured ergonomically in order to facilitate grip by a user.

The load-bearing frame 11 is constituted by a metallic bar that is bent so as to define three points for fixing to the shell, a front point 20 and two rear points 21 and 22.

Such grip element 19 is constituted by an element made of thermoplastic polyurethane (TPU) that has an arc-like profile and is preset to be arranged below the shell 12, starting from a rear edge 17 of the rear part 16 of such shell 12, until it affects the engagement regions 23 and 24 of the rear points 21 and 22 of the load-bearing frame 11 with such shell 12.

In the embodiment of the invention described here by way of nonlimiting example of the invention, such grip element 19 has two opposite protrusions 25 and 26, which are defined at the engagement regions 23 and 24 of the shell 12, between which there is a recess 27 preset to be occupied by the fingers of a hand of a user.

The protrusions 25 and 26 are extended predominantly in the anteroposterior direction X1 of the saddle 10.

Such raised portions 25 and 26 are extended along two directions X2 and X3 that lie transversely to the anteroposterior direction that can be identified in the longitudinal axis X1 and are inclined so as to form with such longitudinal axis X2, in a plan projection view, corresponding acute angles 35 and 36, measured with respect to the intersection points and by moving clockwise starting from the longitudinal axis X1 toward the corresponding inclined directions X2 and X3.

In particular, the inclined directions X2 and X3 are parallel.

By way of the particular directions X2 and X3 of extension of the protrusions 25 and 26, such protrusions define a particular ergonomic shape of the grip element 19, which is aimed at facilitating the grip of the saddle with the right hand rather than with the left hand, depending on the inclination of the directions extension of the protrusions 25 and 26.

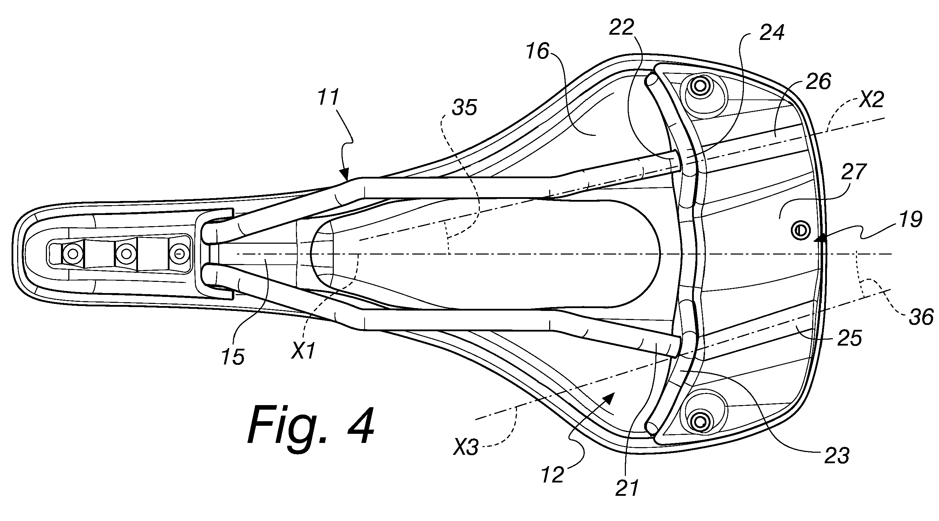

For example, the saddle 10, in the way in which it is shown in plan view in Figure 4, has a grip element 19 that facilitates grip with the right hand, since the protrusions 25 and 26 are extended so as to delimit laterally what would be the space occupied by such hand in the act of gripping a saddle of a known type.

In the present constructive example, the grip element 19 is contoured so as to follow the perimetric lines of the rear edge 17 of the shell 12, up to a central region of the rear part 16 of such shell.

The grip element 19 is fixed below the shell 12 with threaded elements or other similar and equivalent reversible fixing means or by adhesive bonding.

The shell 12 is made for example of nylon filled with carbon.

The saddle 10 is completed by a supporting body 30 that is contoured to accommodate the front point 20 of the frame 11 and to be locked to the front part 15 of the shell 12 by means of screws or other fixing means of a known type.

In practice it has been found that the invention achieves the intended aim and objects.

In particular, the invention provides a saddle that makes it easier, more practical and safer to grip such saddle at the rear, in particular for a triathlete in the act of removing, with wet hands, a bicycle from the stand that supports it, immediately after ending the swimming stage.

Moreover, the invention provides a saddle that has an overall performance and comfort that are not lower than those of saddles of the known type.

The invention thus conceived is susceptible of numerous modifications and variations, all of which are within the scope of the appended claims; all the details may further be replaced with other technically equivalent elements.

In practice, the components and the materials used, so long as they are compatible with the specific use, as well as the contingent shapes and dimensions, may be any according to requirements and to the state of the art.

The disclosures in Italian Utility Model Application no. 202015000025964 (UB2015U045145), from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A cycling saddle (10) for triathlon bicycles, comprising a frame (11), a shell (12) and a pad (13), said shell (12) comprising a front part (15), which has a predominantly longitudinal extension, and a wider rear part (16), said cycling saddle being **characterized in that** at the rear part (16) of said shell (12) there is a grip element (19) that is contoured ergonomically in order to facilitate grip by a user.

2. The cycling saddle according to claim 1, **characterized in that** said grip element (19) is constituted by a thermoplastic polyurethane body that has an arc-like profile and is preset to be arranged below the shell (12), starting from a rear edge (17) of said rear part (16) of said shell (12).

3. The cycling saddle according to one or more of the preceding claims, **characterized in that** said grip element (19) has two opposite protrusions (25, 26), between which a recess (27) is defined which is preset to be occupied by the fingers of a hand of a user.

4. The cycling saddle according to one or more of the preceding claims, **characterized in that** said protrusions (25, 26) are extended predominantly in the anteroposterior direction of the saddle (10).

5. The cycling saddle according to one or more of the preceding claims, **characterized in that** said protrusions (25, 26) are extended along two directions (X2, X3) that are transverse to the anteroposterior direction (X1) and are inclined so as to form with said longitudinal axis (X1), in a plan projection view, corresponding acute angles (35, 36), measured with respect to the intersection points and moving clockwise starting from the anteroposterior direction (X1) toward the corresponding inclined directions (X2, X3).

6. The cycling saddle according to one or more of the preceding claims, **characterized in that** said inclined directions (X2, X3) are parallel.

7. The cycling saddle according to one or more of the preceding claims, **characterized in that** said grip element (19) is contoured so as to follow the perimetric lines of the rear edge (17) of the shell (12) up to a central region of the rear part (16) of said shell.

8. The cycling saddle according to one or more of the preceding claims, **characterized in that** said grip element (19) is fixed below the shell (12) with threaded elements or other similar and equivalent reversible fixing means.
